# EUROPEAN PATENT APPLICATION

(11) **EP 4 748 808 A1**
(43) Date of publication of application: **27.05.2026**
(21) Application number: 25207641.9
(22) Date of filing: 09.10.2025
(51) Int. Cl.: C04B 14/42, C04B 28/26, C04B 111/28

(54) **COMPOSITE MATERIAL AND METHOD FOR MANUFACTURING AN INSULATION BRICK WITH RECYCLED FIBERGLASS FROM WIND TURBINE BLADES**

(30) Priority: 11.10.2024 IT 202400022704
(71) Applicant: Compton Industriale SpA, 36033 Isola Vicentina (VI) (IT); Tabarelli de Fatis, Stefano, 37128 Verona (IT)
(72) Inventor: TABARELLI DE FATIS, Stefano, 37128 Verona (IT)
(74) Representative: Cutropia, Gianluigi

(57) **Abstract**

A composite material for manufacturing an insulation brick comprises a filler (F) obtained from recycled fiberglass and a silicate base binder (L); said filler (F) being a fiberglass powder with particle size lower than 500 µm.

## Description

The present invention relates to a composite material and a method for manufacturing an insulation brick using recycled fiberglass, in particular from wind turbine blades, but also from post-use products in the naval and aeronautical sectors.

One of the increasingly important issues is the disposal and reuse of fiberglass from wind turbine blades, decommissioned boats in the naval sector, or products in the aeronautical sector.

It is well known that, after a certain number of years, wind turbine blades need to be replaced due to the aging of the structure and the consequent potential danger. Furthermore, the rapid technological advances in the structure and shape of the wind turbine blades render them obsolete after just ten years of service.

The structure of wind turbine blades consists of a composite of glass fiber and impregnating resins, commonly called fiberglass. In some cases, wind turbine blades may comprise a core of expanded material. The naval and aeronautical sectors also face the problem of miles of obsolete or aged products due to their exposure to atmospheric agents.

It is clear that the disposal of wind turbine blades and fiberglass products from the naval and aeronautical sectors is very costly, precisely because fiberglass is a material that is difficult to dispose of and, if not disposed of, causes significant pollution and environmental impact.

Building bricks are known, which are generally made of clay. However, concrete bricks are also known.

Generally, a solid brick consists of a parallelepiped block measuring 12x24x5.5 mm.

Such a brick has the physical and mechanical properties shown in Table 1.

**Table 1**

| CHARACTERISTIC | Unit of Measurement | |
|---|---|---|
| Gross volumetric mass | Kg/m³ | 1700 |
| Gross volumetric mass | N/mm² | 35 |
| Compressive strength in a direction perpendicular to vertical loads (f_{bm}) | N/mm² | 12 (thickness 12) |
| Compressive strength in a direction perpendicular to vertical loads (f_{bm}) | N/mm² | 12 (thickness 24) |

Moreover, such a brick has the hygrometric properties listed in Table 2.

**Table 2**

| CHARACTERISTIC | Unit of Measurement | |
|---|---|---|
| Specific heat "Cp" | J/kgK | 1000 |
| Vapor permeability "δ" | Kg/msPa | 20x10⁻¹² |
| Resistance to vapor diffusion "µ" | adim. | 10 |
| Mold risk test | | No risk |
| Glaser test | | No condensation on wall |

Although such a brick has good structural characteristics in terms of mechanical strength and a good thermal insulation, it is clear that such a type of brick has a very high specific weight and causes problems during transportation and handling.

US2011306255A1 describes a composite material of construction, without mentioning a possible use as a brick. The composite material comprises a filler and a binder. The filler comprises a fiber material that can be chosen from various types of materials, including fiberglass fibers that may come from recycled materials, but wind turbine blades are not specifically mentioned. The fibers may have a length of 10 nm to 1 m and a diameter of 10 nm to 1 m. The binder may comprise "water glass" powder, which is a term that does not specify the type of silicate (potassium, sodium, lithium). Furthermore, the use of powdered silicate generates a product that is totally different from that obtained with liquid silicate, as with a powdered silicate it is not possible to obtain certain chemical reactions with the filler and catalysts and expanders, if any. The percentages of fiber material and binder can vary within a very wide range. The composite material may also comprise expanded clay and brick powder, but it is not stated that the brick powder is finely ground (with a particle size of less than 500 µm). In fact, brick powder must not react with liquid silicate.

Plawecka Kinga et. al "Recycling of Mechanically Ground Wind Turbine Blades as Filler in Geopolymer Composite" describes a geopolymer composite used to manufacture a construction material in replacement of traditional cement. Such a composite comprises a binder comprising sodium silicate with a molar modulus of 2.5 and fiberglass powder obtained from wind turbine blades. The length of the fiberglass fibers is 50-1000 µm. The silicate is alkaline (molar ratio 2.5, even though an alkaline silicate should have a much lower molar ratio). From this document, it is not clear how a geopolymer reaction can be triggered in the absence of an activator, such as metakaolin, but only in the presence of recycled glass fibers. In such a case, the dried product will certainly be soluble in the presence of water and therefore unusable for making bricks.

EP3109217A1 describes a lightweight insulation panel for construction, which obviously cannot be used as a brick, which must be a load-bearing structural element. Such an insulation panel can be made with a silicate-based mineral binder and fiberglass fibers with the addition of an expanding agent, such as hydrogen peroxide, and a catalyst, such as manganese dioxide. There is no mention that the fiberglass fibers come from recycled wind turbine blades, nor is the amount of expanding agent and catalyst used described.

CN109574572A describes a composition for a brick comprising fly ash, sodium silicate, fiberglass, expanding agent, and catalyst. In such a case, the catalyst is octanoate, which is an ester. This document does not describe the catalyst as diacetin or triacetin, nor does it describe the percentage of catalyst. Furthermore, this document does not mention the possibility of using fiberglass from recycled material.

The purpose of the present invention is to eliminate the drawbacks of the prior art by providing a composite material and a method for making an insulation brick from recycled fiberglass from post-use fiberglass products from wind turbine blades and waste products in the naval or aeronautical sector, reducing the contamination and the environmental impact of fiberglass.

Another purpose is to provide such a method for making an insulation brick that is efficient, practical, and easy to implement.

Yet another purpose is to provide such a brick that has excellent characteristics of lightness, thermal insulation, and also mechanical strength.

These purposes are achieved in accordance with the invention with the characteristics of the attached independent claims.

Advantageous embodiments of the invention are apparent from the dependent claims.

Further features of the invention will become clearer from the following detailed description, which refers to a merely exemplary and therefore nonlimiting embodiment illustrated in the accompanying drawings, wherein:

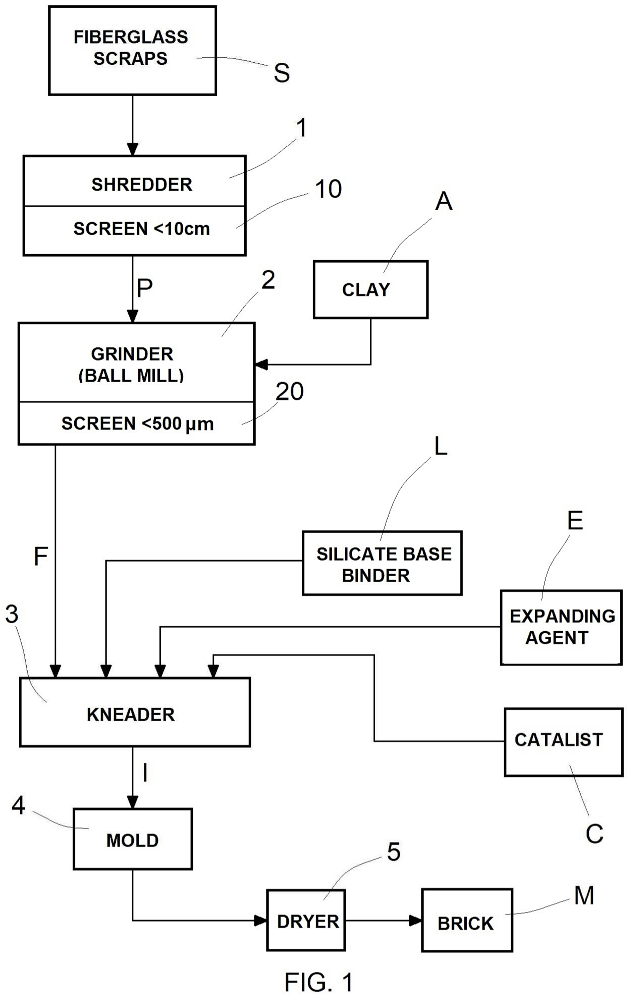

Fig. 1 is a block diagram, schematically illustrating the process for manufacturing an insulation brick according to the invention.

With reference to Fig. 1, in order to manufacture an insulation brick according to the invention, fiberglass scraps (S) specifically from wind turbine blades are used. In fact, it should be noted that the structure of wind turbine blades is a mixed composite, consisting of fibers bound with resins, polyurethane foam, and in some cases wood. Therefore, wind turbine blades are very specific and different from simple fiberglass.

The fiberglass scraps (S) are first shredded in pieces (P) having a dimension of a few centimeters. For such a purpose, a shredder (1) is used, such as a blade shredder with counter-rotating shafts, having a screen (10) with holes less than 10 cm in diameter.

The pieces (P) are finely ground to obtain a powder filler (F) with a particle size of less than 500 µm, preferably less than 50 µm. For such a purpose, a grinder (2) is used, such as a ball mill, having a screen (20) with holes smaller than 500 µm in diameter.

Optionally, the filler (F) may also comprise clay (A) in an amount of up to 50%, preferably comprised between 5% and 15% of the total weight of the filler.

The clay (A) may comprise expanded clay or chamotte obtained from the recycling of finely ground bricks with a particle size of less than 500 µm. The bricks are ground with a mill having a screen with holes of less than 500 µm in diameter. Obviously, the same grinder (2) used to grind the fiberglass pieces (P) can be used to grind the clay (A).

Such a particle size of the clay (A) of less than 500 µm is an important aspect as it is used to obtain reactions with the binder in the form of liquid silicate (formation of iron silicates, etc.).

Once the powder filler (F) has been prepared, a silicate base binder (L) is used. Among the various types of silicates in the binder, alkali metal silicates, such as sodium, lithium, or potassium can be used, although sodium silicate is preferred.

The silicate base binder (L) is liquid and neutral and has a molar ratio of the binder (L) from 2.9 to 3.9, preferably 3.4. The molar ratio refers to the ratio between the silicate anhydride and the alkali metal oxide.

The method provides for mixing the filler (F) with an amount of binder (L) ranging from 10% to 90%, preferably 40%-60%, preferably 50% relative to the weight of the filler (F).

An expanding agent (E) is added to the mixture to generate a gaseous phase. By way of example, the expanding agent (E) can be hydrogen peroxide in solution with 10-100 volumes, preferably 30-40 volumes. The term "volume" refers to the volume of active oxygen when the expanding agent solution is decomposed at room temperature.

The expanding agent (E) is added to the composite material in a weight percentage of between 5%-20%, preferably 8%-12% of the weight of the binder (L).

The selection of the dilution and the percentage of the expanding agent is important in order to achieve a good compromise between the physical strength of the brick and its thermal insulation characteristics.

At this point, a catalyst (C) is added with the aim of decomposing the expanding agent (E) and create an expanding gaseous phase. Moreover, the catalyst (C) has the function of gelling the binder (L), creating an insoluble gel.

By way of example, the catalyst (C) can be an ester, such as diacetin or triacetin. The catalyst (C) is added to the composite material in a weight percentage of between 1%-15%, preferably 6%-8% of the weight of the binder.

Also the selection of the catalyst and its percentage is important in order to gel the binder (L) properly. The combination of the binder (L), which is a neutral liquid silicate, and the catalyst (C), which is an ester, makes the final product stable and insoluble and therefore suitable for making bricks.

The filler (F), the binder (L), the expanding agent (E), and the catalyst (C) are mixed and kneaded by means of a kneader or mixer (3) in such a way to obtain a paste-like mixture (I). The mixture (I) thus obtained is poured into molds (4) having a parallelepiped cavity suitable for containing an expansion of the mixture (I) and giving the final shape of a brick (M) suitable for being used in construction.

Once removed from the mold (4), the brick (M) is dried in a dryer (5) at low temperature to evaporate the water contained in the mixture. The dryer (5) comprises a drying chamber equipped with a high-frequency microwave emission device or a classic wet bulb system with evaporation of the water in the air at constant pressure. Drying takes place with a gradually increasing temperature curve, starting at 40°C and reaching approximately 100°C.

The brick (M) was subjected to testing. From the tests carried out, the brick (M) showed mechanical strength values compatible with those of a traditional clay brick, but a greater thermal insulation and a significantly lower weight than a traditional clay brick.

Numerous modifications can be made to the present embodiment of the invention as expressed in the attached claims, which are within the scope of an expert of the field and fall in any case within the scope of the invention as disclosed by the attached claims.

## Claims

1. Composite material for making an insulation brick comprising:
- a filler (F),
- a silicate base binder (L),
- an expanding agent (E) suitable for generating a gaseous phase in the composite material, and
- a catalyst (C) suitable for decomposing the expanding agent (E) and thus creating an expanding gaseous phase and suitable for gelling the binder (L) to create an insoluble gel;
wherein said filler (F) comprises:
- recycled fiberglass from wind turbine blades comprising fibers bonded with resins and polyurethane foam, in the form of a powder having a particle size of less than 500 µm, obtained with a sieve having holes with a diameter of less than 500 µm, and
- clay (A) comprising chamotte obtained from the recycling of finely ground bricks with a particle size of less than 500 µm, obtained using a sieve with holes smaller than 500 µm in diameter;
wherein said binder (L) is a liquid neutral binder having a molar ratio of silicate anhydride to alkali metal oxide of between 2.9 and 3.9; and
said catalyst (C) is an ester, such as diacetin or triacetin.

2. The composite according to claim 1, wherein the binder (L) comprises sodium silicate.

3. The composite according to any of the preceding claims, wherein the binder (L) is added to the composite in a weight percentage of between 10% and 90%, preferably 40%-60%, relative to the weight of the filler (F).

4. The composite material according to any of the preceding claims, wherein said expanding agent (E) is hydrogen peroxide.

5. The composite material according to any of the preceding claims, wherein said expanding agent (E) is in solution having 10-100 volumes, preferably 30-40 volumes, wherein "volume" is the volume of active oxygen when the expanding agent solution is decomposed at room temperature.

6. The composite material according to any of the preceding claims, wherein said expanding agent (E) is added to the composite material in a weight percentage of between 5%-20% of the weight of the binder (L).

7. The composite material according to any of the preceding claims, wherein said catalyst (C) is added to the composite material in a weight percentage of between 1%-15% of the weight of the binder (L).

8. Brick (M) for construction obtained from a composite material according to any of the preceding claims.

9. Manufacturing process of an insulation brick comprising the following steps:
- grinding pieces (P) of recycled fiberglass from wind turbine blades comprising fibers bonded with resins and polyurethane foam, until a powder with a particle size of less than 500 µm is obtained,
- grinding clay (A) comprising chamotte obtained from the recycling of finely ground bricks with a particle size of less than 500 µm,
- mixing said pieces (P) of recycled fiberglass with said ground clay (A) to obtain a filler (F) in the form of a powder with a particle size of less than 500 µm,
- mixing said filler (F) with a liquid, neutral silicate base binder having a molar ratio of between 2.9 and 3.9, with an expanding agent (E) and with a catalyst (C) which is an ester, such as diacetin or triacetin, in such a way to obtain a mixture (I),
- pouring the mixture (I) into a mold (4) to make a brick (M), and
- drying the brick (M).
